# EUROPEAN PATENT APPLICATION

(11) **EP 1 939 809 A1**
(43) Date of publication of application: **02.07.2008**
(21) Application number: 06796413.0
(22) Date of filing: 14.08.2006
(51) Int. Cl.: G06T 7/00

(54) **SCENE ANALYSIS DEVICE AND METHOD**

(30) Priority: 07.09.2005 JP 2005259130
(71) Applicant: Pioneer Corporation, Tokyo 153-8654 (JP)
(72) Inventor: FUJITA, Ryujiro, Tsurugashima-shi, Saitama, 350-2288 (JP)
(74) Representative: Viering, Jentschura & Partner
(86) International application number: PCT/JP2006/316023
(87) International publication number: WO 2007/029454

(57) **Abstract**

A scene analysis device has a scene image acquisition means for acquiring scene images, an image split means for splitting each of the scene images into image pieces, a distance calculation means for calculating the distance to a part of a scene corresponding to each of image pieces corresponding to the scene images, and a distant scene determination means for determining, based on the calculated distance, whether the part of a scene is a distant scene.

## Description

### Technical Field

The present invention relates to a scene analyzing apparatus and method, which judge the characteristic of a scene included in an image by analyzing the image, which is shot with a camera or the like provided for an automobile, and a computer program which realizes such functions.

### Background Art

When we encounter a scene, such as an ocean, a mountain, and a night view, while driving an automobile, it is extremely useful if a picture of the scene can be automatically shot, or music can be automatically changed to match the scene. For example, a patent document 1 suggests such a technology that position information about a shooting recommended point is registered in advance in an information center and that a vehicle downloads the position information through the Internet and performs the shooting if a current position matches the position of the recommended point.

Patent document 1: Japanese Patent Application Laid Open NO. 2003-198904

### Disclosure of Invention

### Subject to be Solved by the Invention

However, according to the technology of the patent document 1, it is necessary to register in advance the position information about the recommended point suited for the shooting. Moreover, since it is registered before a travel, for example, even if the scene is changed (or looks different) because of the look of the sky and if it is not suitable for the shooting, there is a possibility that the shooting or the like is performed as the recommended point.

In view of the aforementioned problem, it is therefore an object of the present invention to provide a scene analyzing apparatus and method, which judge the characteristic of a scene included in an image by analyzing the image, which is shot with e.g. an on-vehicle camera, and a computer program which realizes such functions.

### Means for Solving the Object

### (Scene Analyzing Apparatus)

The above object of the present invention can be achieved by a scene analyzing apparatus provided with: a scenic image obtaining device for obtaining a plurality of scenic images; an image dividing device for dividing each of the plurality of scenic images into a plurality of image pieces; and a distant view judging device for judging whether or not one portion of a scene, which corresponds to each of the plurality of image pieces, of the scene corresponding to the scenic image is a distant view.

According to the scene analyzing apparatus of the present invention, in its operation, firstly, the scenic image is obtained by shooting a scene, such as a landscape, an object, and an objective aggregate, by the scenic image obtaining device which is mounted on a movable body and which includes a camera or the like directed in a travel direction. The plurality of scenic images are obtained, intermittently at constant or fixed time intervals, in other words, in time series. Moreover, for example, if a pantoscopic camera, i.e. stereo camera (in other words, a plurality of cameras) is used, the plurality of scenic images in total, i.e. one scenic image by each camera, are obtained simultaneously. It is only necessary to obtain at least two scenic images. That is, the scenic image obtaining device of the present invention "obtaining the plurality of scenic images" includes the case that the plurality of scenic images are obtained by obtaining, in order, the scene, which changes momentarily, in accordance with a positional change viewed from one scenic image obtaining device which changes in position, and the case that the plurality of scenic images are obtained simultaneously or in tandem, by using the scene as a shooting subject, which is seen in slightly different directions from two or more scenic image obtaining devices which are fixed in position.

Next, each of the obtained plurality of scenic images is divided into the plurality of image pieces, and image piece data corresponding to each of the plurality of image pieces is stored into a memory medium, such as a hard disk. For example, if the size of the scenic image is 1280 × 1024 pixels, the size of the image piece is desirably about 30 × 30 pixels. Incidentally, the size of the image piece is desirably determined in view of the accuracy and processing speed of the characteristic judging device or the like. Moreover, depending on the relationship between the size of the scenic image and the size of the image piece, in some cases the entire scene image cannot be divided into uniform image pieces. In this case, the edge portion of the scenic image may be excluded from a target of the image dividing device.

Then, it is judged by the distant view judging device whether or not the one portion of the scene corresponding to each of the plurality of image pieces is the distant view. Here, the "distant view" of the present invention means one portion of the scene corresponding to an arbitrary shooting subject portion, which constitutes the scene, when a distance to the arbitrary shooting subject portion is greater than a predetermined distance. At this time, the predetermined distance may be a fixed distance set in advance, or a distance which can be variably set in accordance with the type of the scene, an operator's preference, or the like. The distant view judging device judges that the one portion of the scene corresponding to the image piece is the distant view (i.e. for example, a distant scene, such as the sky, an ocean, and a mountain) if a relative distance between the one portion of the scene corresponding to each image piece and the scenic image obtaining device (i.e. an average value of the relative distances between portions of the scene corresponding to a plurality of pixels included in each image piece and the scenic image obtaining device) is greater than a predetermined value. The distant view judging device judges that the one portion of the scene corresponding to the image piece is a close view (i.e. for example, a close scene, such as a road in drive and a vehicle ahead) if the aforementioned relative distance is less than the predetermined value. Incidentally, it is also possible to define one or a plurality of intermediate distances between the distant view and the close view.

As a result, it is possible to judge which portion of the scene corresponding to the scenic image is the distant view and which portion is the close view.

In one aspect of the scene analyzing apparatus of the present invention, it is further provided with: a distance calculating device for calculating a distance to the one portion of the scene corresponding to each of the plurality of image pieces, the distant view judging device judging whether or not the one portion of the scene is the distant view on the basis of the calculated distance.

According to this aspect, the distance to the one portion of the scene corresponding to each of the plurality of image pieces is calculated by the distance calculating device. Typically, the relative distance between the one portion of the scene corresponding to each of the plurality of image pieces and the scenic image obtaining device (more correctly, a reference position in the scenic image obtaining device) is calculated. Alternatively, the distance to the one portion of the scene corresponding to each of the plurality of image pieces is calculated from a reference position which has a predetermined positional relationship with the scenic image obtaining device (e.g. a particular point in the scene analyzing apparatus, a predetermined point in a vehicle body on which the scene analyzing apparatus is mounted, or the like). For example, if a monocular camera is used, firstly, an optical flow between two scenic images obtained in tandem in time series is calculated. On the calculated optical flow, the relative distances between the portions of the scene corresponding to the plurality of pixels included in each image piece and the scenic image obtaining device are calculated. Then, the average value of the relative distances between the portions of the scene corresponding to the plurality of pixels included in each image piece and the scenic image obtaining device is calculated as the relative distance between the one portion of the scene corresponding to each image piece and the scenic image obtaining device. Incidentally, in the calculation of the relative distance between the one portion of the scene and the scenic image obtaining device, if the distance is extremely large with regard to the one portion of the scene, compared to one portion of another scene, such as a scene corresponding to the sky, the one portion of the scene may be calculated as infinity. Then, it is judged by the distant view judging device whether or not the one portion of the scene is the distant view on the basis of the calculated relative distance. The distant view judging device can more certainly judge that the one portion of the scene corresponding to the image piece is the distant view if the calculated relative distance is greater than the predetermined value, and that the one portion of the scene corresponding to the image piece is the close view if the calculated relative distance is less than the predetermined value. Thus, it is possible to judge which portion of the scene corresponding to the scenic image is the distant view and which portion is the close distance, more certainly.

In another aspect of the scene analyzing apparatus of the present invention, it is further provided with a characteristic judging device for judging whether or not the one portion of the scene corresponds to at least one of a sky, an ocean, a mountain, and a night view, with regard to the image piece corresponding to the one portion of the scene judged to be the distant view.

According to this aspect, it is judged by the characteristic judging device whether or not the one portion of the scene corresponds to at least one of the sky, the ocean, the mountain, and the night view, with regard to the image piece corresponding to the one portion of the scene judged to be the distant view. Preferably, it is judged which of the sky, the ocean, the mountain, and the night view the one portion of the scene is. Thus, by setting in advance at least one scene of the sky, the ocean, the mountain, and the night view, it is possible to automatically store the scenic image corresponding to the distant view, such as the sky, the ocean, the mountain, and the night view, set in advance, while driving a vehicle. Alternatively, it is possible to change in-vehicle music and video to the music and video according to the sky, the ocean, the mountain, and the night view.

In an aspect including the characteristic judging device, as described above, the characteristic judging device may include a sky judging device for judging whether or not the one portion of the scene is the sky, from a variance value in lightness of a plurality of pixels included in the image piece located in an upper part of the scenic image, with regard to the image piece located in the upper part of the plurality of image pieces.

By virtue of such construction, the variance value in lightness (i.e. brightness) of the plurality of pixels included in each image piece is calculated by the sky judging device, with regard to the image piece located in the upper part, and typically in the upper half of the scenic image, of the plurality of image pieces. At this time, color information about the image piece data corresponding to the image piece is RGB-system color information, this color information is converted by the characteristic judging device to color-system color information using hue, saturation, and lightness (i.e. brightness) as parameters, e.g. HLS-system color information.

Next, it is judged whether or not the image piece in the upper part of the scenic image is the sky, for each one image piece. For example, the sky judging device judges that the one portion of the scene corresponding to the image piece is the sky if the variance value in lightness of all of one image piece which is a judgment target and eight image pieces located around the target image piece (i.e. eight adjacent image pieces) is less than or equal to a predetermined value (e.g. 10), and judges the one portion of the scene is not the sky if the variance value in lightness of any of the one image piece which is the judgment target and the eight image pieces located around the target image piece (i.e. eight adjacent image pieces) is greater than the predetermined value (e.g. 10). Therefore, it is possible to certainly judge whether or not the one portion of the scene corresponding to each image piece is the sky. For example, it is also possible to judge the look of the sky, such as a blue sky, a white cloud, a black cloud, a sunset sky, and a night sky.

In an aspect including the sky judging device, as described above, the characteristic judging device may include an ocean judging device for judging whether or not the one portion of the scene is the ocean, on the basis of average hue and average saturation of the plurality of pixels included in the image piece judged to be the sky, with regard to the image piece that is not judged to be the sky.

By virtue of such construction, it is judged by the ocean judging device whether or not the one portion of the scene is the ocean, on the basis of the average hue and the average saturation of the plurality of pixels included in the image piece judged to be the sky, with regard to the image piece that is not judged to be the sky. For example, the ocean judging device judges that the image piece is the ocean if the average hue (or color tone) of the plurality of pixels included in the image piece that is not judged to be the sky is within a predetermined range of value including the average hue of the plurality of pixels included in the image piece judged to be the sky and if the average lightness of the plurality of pixels included in the image piece that is not judged to be the sky is less than or equal to the average lightness of the plurality of pixels included in the image piece judged to be the sky. Thus, it is possible to judge whether or not the one portion of the scene is the ocean by reflecting such a characteristic that in most cases the ocean reflects the color of the sky and has a deep color similar to the color of the sky. Therefore, it is possible to judge whether or not the one portion of the scene is the ocean, highly accurately.

In an aspect including the sky judging device, as described above, the characteristic judging device includes a mountain judging device for detecting a boundary between the sky and the scene except the sky by analyzing a color property in each of the image pieces adjacent to the image piece judged to be the sky, of the image pieces that are not judged to be the sky, to thereby judge whether or not the scene includes the mountain.

By virtue of such construction, firstly the color property is analyzed by the mountain judging device in each of the image pieces adjacent to the image piece judged to be the sky, of the image pieces that are not judged to be the sky. If the analysis of the color property shows that the pixels judged to have the color of the sky account for a certain percentage or more in one image piece and that the pixels that are not judged to have the color of the sky account for less than the certain percentage, it is judged that the image piece highly likely includes a ridgeline. Here, the expression "judged to have the color of the sky" means to be judged that each of the hue, lightness, and saturation of the pixel is included in a range of the hue, lightness, and saturation in the aforementioned sky judging device. Then, if there are a certain number or more of the image pieces judged to highly likely include the ridgeline, it is judged that the scene includes the mountain. Thus, according to this aspect, by detecting the ridgeline, it is possible to judge whether or not the scene includes the mountain. Incidentally, by reducing the size of the image piece, it is also possible to judge the shape of the mountain or a mountain range.

In an aspect including the characteristic judging device, as described above, the characteristic judging device may include a night view judging device for judging whether or not the one portion of the scene is the night view, on the basis of the number of pixel groups classified in a higher part than a reference, of a plurality of pixel groups classified by binarizing the pixels with a predetermined value of lightness as the reference, with regard to each of the plurality of image pieces.

By virtue of such construction, firstly the pixels are binarized by the night view judging device, on the basis of the predetermined value of lightness (i.e. brightness), for each of the plurality of image pieces. By this, from the plurality of pixels included in one pixel image, the pixel group composed of the adjacent pixels with higher lightness than the predetermined value (including one pixel with higher lightness than the predetermined value, which is adjacent to the pixel with lightness less than the predetermined value) is distinguished. For example, the pixels with higher lightness than that of the surroundings scatter in one image piece as many white particles exist in the background of a black color. Then, the number of image groups composed of the adjacent pixels with higher lightness than the predetermined value is calculated. Then, if the number of image groups composed of the adjacent pixels with higher lightness than the predetermined value is greater than a predetermined value (e.g. 10), it is judged that the image piece highly likely includes the night view. Here, the "night view" is a night scene, and it means what includes much light, such as a building, a residential street, and an automobile. Then, if there are, for example, the predetermined number (e.g. 10) or more of the image pieces judged to highly likely include the night view, it is judged that the scene includes the night view. Thus, it is possible to judge whether or not the one portion of the scene is the night view by reflecting such a characteristic that in most cases the night view includes many light points with higher lightness than that of the surroundings. Therefore, it is possible to judge whether or not the one portion of the scene is the night view, highly accurately.

Incidentally, the level or extent of the night view may be judged from the number of image pieces judged to highly likely include the night view.

Moreover, incidentally, a processing speed can be improved by limiting the image piece which is a target of the night view judging device, only to the image piece judged to be the distant view by the aforementioned distant view judging device. Moreover, the limit may be like only if there are a certain number (e.g. 10) or more of the image pieces judged to be a night sky by the aforementioned sky judging device.

In an aspect including the characteristic judging device, as described above, it may be further provided with a scenic image storing device for storing the scenic images in accordance with a characteristic judgment result by the characteristic judging device.

By virtue of such construction, if it is judged to be the scenic image including the ocean and a mountain as the characteristic judgment result by the characteristic judging device, the scenic image is stored by the scenic image storing device into a storage area of a memory apparatus. Thus, for example, it is possible to automatically store the scenic image which satisfies a condition determined in advance by a user or initial setting at a factory.

In an aspect including the sky judging device, as described above, the sky judging device may judge a look of the sky in the one portion of the scene judged to be the sky.

By virtue of such construction, the sky judging device judges the look of the sky in each image piece, on the basis of the average value in the hue, lightness, and saturation, with regard to the image pieces judged to be the sky. That is, the sky judging device judges the look of the sky, from whether or not the average value in the hue, lightness, and saturation of the image pieces, which are the judgment targets, satisfies a judgment condition set in advance. As the look of the sky in the image piece, for example, there are set a "blue sky", a "white cloud", a "black cloud", a "sunset", a "night", and the like. The sky judging device judges the look of the sky in each image piece and then counts the number of image pieces with each look of the sky. The sky judging device judges that the look of the sky with the largest number of the numbers of image pieces with the respective looks of the sky is the look of the sky in the scenic image. For example, if the number of image pieces judged to be the "blue-sky" is greater than the any other numbers of image pieces judged to be the other looks of the sky, such as the "white cloud", the "black cloud", the "sunset", and the "night", the look of the sky in the scenic image is judged to be the "blue-sky". Thus, it is possible to judge the look of the sky in the one portion of the scene, highly accurately.

### (Scene analyzing Method)

The above object of the present invention can be also achieved by a scene analyzing method provided with: a scenic image obtaining process of obtaining a plurality of scenic images; an image dividing process of dividing each of the plurality of scenic images into a plurality of image pieces; and a distant view judging process of judging whether or not one portion of a scene, which corresponds to each of the plurality of image pieces, of the scene corresponding to the scenic image is a distant view.

According to the scene analyzing method of the present invention, it is possible to receive various benefits owned by the scene analyzing apparatus of the present invention described above.

Incidentally, in response to various aspects owned by the scene analyzing apparatus of the present invention, the scene analyzing method of the present invention can also employ various aspects.

### (Computer Program)

The above object of the present invention can be also achieved by a computer program making a computer function as the aforementioned scene analyzing apparatus of the present invention.

According to the computer program of the present invention, the aforementioned scene analyzing apparatus of the present invention can be embodied relatively readily, by loading the computer program from a recording medium for storing the computer program, such as a ROM, a CD-ROM, a DVD-ROM, a hard disk or the like, into the computer, or by downloading the computer program, which may be a carrier wave, into the computer via a communication device.

Incidentally, in response to various aspects owned by the scene analyzing apparatus of the present invention, the computer program of the present invention can also employ various aspects.

The above object of the present invention can be also achieved by a computer program product in a computer-readable medium for tangibly embodying a program of instructions executable by a computer, to make the computer function as the aforementioned scene analyzing apparatus of the present invention (including its various aspects).

According to the computer program product of the present invention, the aforementioned scene analyzing apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned scene analyzing apparatus of the present invention.

These effects and other advantages of the present invention will become more apparent from the embodiment explained below.

As explained above, the scene analyzing apparatus of the present invention is provided with: the scenic image obtaining device; the image dividing device; the distance calculating device; and the distant view judging device. Thus, it is possible to judge which portion of the scene corresponding to the scenic image is the distant view and which portion is the close view. According to the aspect further provided with the characteristic judging device described above, it is possible to judge whether or not one portion of the scene corresponds to at least one of the sky, the ocean, a mountain, and a night view. For example, by setting in advance at least one scene of the sky, the ocean, the mountain, and the night view, it is possible to automatically store the scenic image corresponding to the distant view, such as the sky, the ocean, the mountain, and the night view, set in advance while driving a vehicle. Alternatively, it is possible to change in-vehicle music and video to the music and video according to the sky, the ocean, the mountain, and the night view. The scene analyzing method of the present invention is provided with: the scenic image obtaining process; the image dividing process; the distance calculating process; and the distant view judging process. Thus, it is possible to receive various benefits owned by the scene analyzing apparatus of the present invention described above. The computer program of the present invention makes a computer function as the scene analyzing apparatus of the present invention. Thus, by reading the computer program and executing it on the computer, the scene analyzing apparatus of the present invention can be realized, relatively simply.

### Brief Description of Drawings

[FIG. 1] FIG. 1 is a block diagram showing the structure of a scene analyzing apparatus in a first embodiment.
[FIG. 2] FIG. 2 is a flowchart showing the operations of the scene analyzing apparatus in the first embodiment.
[FIG. 3] FIG. 3 is a flowchart showing the content of a scenic image obtaining process.
[FIG. 4] FIG. 4 is an explanatory view showing a scenic image corresponding to scenic image data.
[FIG. 5] FIG. 5 is an explanatory view showing that the image in FIG. 4 is divided into image pieces.
[FIG. 6] FIG. 6 is a flowchart showing the content of a distance calculation process.
[FIG. 7] FIG. 7 is an explanatory view showing a result of the distance calculation process performed on the image in FIG. 5.
[FIG. 8] FIG. 8 is an explanatory view showing a result of a distant view judgment process performed on the image in FIG. 7.
[FIG. 9] FIG. 9 is a flowchart showing the content of a characteristic judgment process.
[FIG. 10] FIG. 10 is a flowchart showing the content of a sky judgment process.
[FIG. 11] FIG. 11 is a flowchart showing the content of an ocean judgment process.
[FIG. 12] FIG. 12 is an explanatory view explaining a result of a mountain judgment process performed on the image in FIG. 5.
[FIG. 13] FIG. 13 is an explanatory view explaining a result of a night view judgment process performed on image pieces.

### Description of Reference Codes

1 scene analyzing apparatus
11 camera
12 input device
13 obstacle recognition device
14 image division device
15 distance calculation device
16 distant view judgment device
17 sky judgment device
18 ocean judgment device
19 mountain judgment device
20 night view judgment device
21 memory apparatus
22 control device
23 information input device
24 information display device

### Best Mode for Carrying Out the Invention

Hereinafter, the best mode for carrying out the present invention will be explained in each embodiment in order with reference to the drawings.

### <First Embodiment>

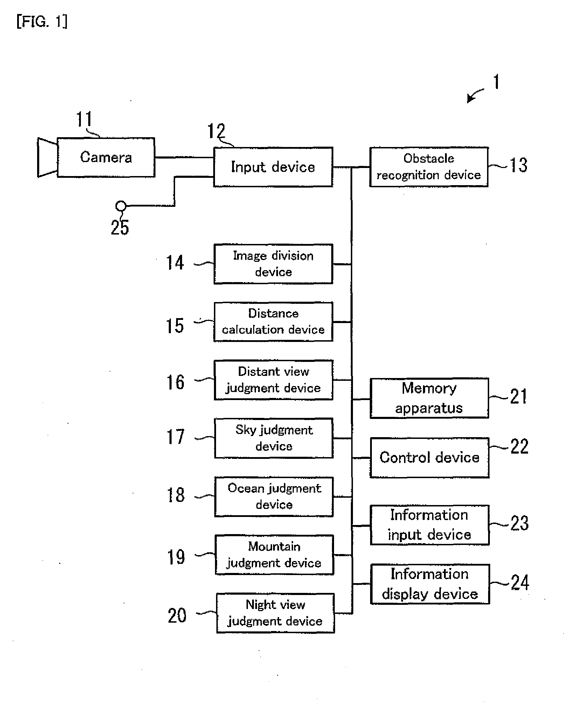

With reference to FIG. 1 to FIG. 13, a scene analyzing apparatus in a first embodiment of the present invention will be explained.

### (Structure of Scene Analyzing Apparatus)

Firstly, with reference to FIG. 1, the structure of the scene analyzing apparatus in the first embodiment will be explained. FIG. 1 is a block diagram showing the structure of the scene analyzing apparatus in the first embodiment.

In FIG. 1, a scene analyzing apparatus 1 is provided with: a camera 11; an input device 12; an obstacle recognition device 13; an image division device 14; a distance calculation device 15; a night view judgment device 16; a sky judgment device 17; an ocean judgment device 18; a mountain judgment device 19; a night view judgment device 20; a memory apparatus 21; a control device 22; an information input device 23; and an information display device 24. Here each of the camera 11, the input device 12, and the obstacle recognition device 13 is one example of the "scenic image obtaining device" of the present invention. The camera 11, the input device 12, and the obstacle recognition device 13 are unified to constitute one portion of the "scenic image obtaining device".

The scene analyzing apparatus 1 is desirably mounted on a movable body. For example, the scene analyzing apparatus 1 may be built in a car navigation apparatus and is mounted on a vehicle. Alternatively, of the constituent elements of the scene analyzing apparatus 1, only a camera may be mounted on the movable body, and the other constituent elements may be located in companies, laboratories, observation offices, or rooms at home. In this case, the camera and the structural object provided in the room are connected by wireless communication.

The camera 11 shoots, for example, a scene, such as a landscape, an object, or an objective aggregate, ahead in a traveling direction of the movable body. The camera 11 is desirably mounted on the front side in the travelling direction of the movable body to shoot a scene ahead in the traveling direction of the movable body. For example, the camera 11 is desirably mounted in the vicinity of an automobile front bumper, front glass, or the like. The camera 11 may be a digital camera or analog camera. Moreover, the camera 11 may be a camera for taking a picture (still image), or a camera for shooting video (motion picture), i.e. a video camera. In any case, the camera 11 is a camera which allows serial shooting or continuous shooting. Moreover, the camera 11 may be a pantoscopic camera, i.e. stereo camera (in other words, a plurality of cameras).

The input device 12 generates image data on the basis of still image data or motion picture data outputted from the camera 11. The input device 12 is provided, for example, with an input interface circuit, a control apparatus for image processing, an arithmetic apparatus or the like. Incidentally, the input device 12 may be provided with an external input terminal 25 to connect an image input apparatus except the camera 11, so that the image data can be generated on the basis of the still image data and the motion picture data outputted from the image input apparatus except the camera 11. Moreover, if the camera 11 is an analog camera, the input device 12 is provided with a D/A converter (Digital / Analog converter) for converting an analog still signal or motion picture signal to a digital still signal or motion picture signal.

The obstacle recognition device 13 recognizes that an obstacle is approaching the camera 11 and the obstacle is blocking between the camera 11 and a scene which is a shooting target.

The image division device 14 divides the image corresponding to the image data into a plurality of image pieces.

The distance calculation device 15 calculates a distance between one portion of a scene included in each image piece, divided by the image division device 14, and the camera 11 (more correctly, a reference point in the camera 11). The calculated distance here is a relative distance between portions of the scene included in the image piece, and it is not necessarily an absolute distance between one portion of the scene and the camera 11. That is, it is only necessary to know whether one portion of the scene included in which image piece is relatively far or close. Incidentally, if what is shown on the entire image corresponding to the image data is one scene, then what is shown in each image piece obtained by dividing the image corresponding to the image data corresponds to one portion of the scene. The "one portion of the scene" has the above meaning.

The distant view judgment device 16 judges whether or not one portion of the scene is a distant view, on the basis of the calculated distance.

The sky judgment device 17 judges whether or not a scene included in a scenic image includes sky.

The ocean judgment device 18 judges whether or not the scene included in the scenic image includes an ocean.

The mountain judgment device 19 judges whether or not the scene included in the scenic image includes a mountain.

The night view judgment device 20 judges whether or not the scene included in the scenic image includes a night view.

Each of the sky judgment device 17, the ocean judgment device 18, the mountain judgment device 19 and the night view judgment device 20 is one example of one portion of the "characteristic judging device" of the present invention.

Each of the obstacle recognition device 13, the image division device 14, the distance calculation device 15, the distant view judgment device 16, the sky judgment device 17, the ocean judgment device 18, the mountain judgment device 19 and the night view judgment device 20 is provided, for example, with a central processing unit, a multiprocessor, or a microcomputer or the like.

The memory apparatus 21 is provided with a work area for performing a process by each constituent element of the scene analyzing apparatus 1. The work area is used for, for example, an image data extraction process by the input device 12, an obstacle recognition process by the obstacle recognition device 13, an image division process by the image division device 14, a distance calculation process by the distance calculation device 15, a distant view judgment process by the distant view judgment device, a sky judgment process by the sky judgment device 17, an ocean judgment process by the ocean judgment process 18, a mountain judgment process by the mountain judgment device 19, a night view judgment process by the night view judgment device 20, or the like. Moreover, the memory apparatus 21 has a data storage area. In the data storage area, there are stored sky judgment condition information used for the sky judgment process by the sky judgment device 17, ocean judgment condition information used for the ocean judgment process by the ocean judgment device 18, and the like.

The control device 17 controls the operation of each of the constituent elements of the scene analyzing apparatus 1.

The information input device 18 allows the sky judgment condition information used for the sky judgment process by the sky judgment device 17 to be inputted from the exterior.

The information display device 19 displays the result of the sky judgment process by the sky judgment device 17, or the like.

### (Operations of Scene AnalyzingApparatus)

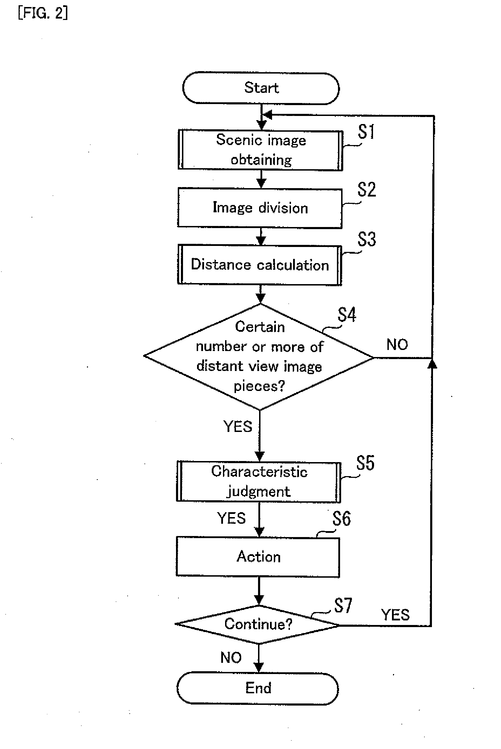

Next, with reference to FIG. 2 to FIG. 13, an explanation will be given on the operations of the scene analyzing apparatus in the first embodiment. FIG. 2 is a flowchart showing the operations of the scene analyzing apparatus in the first embodiment.

As shown in FIG. 2, on the scene analyzing apparatus 1, a series of operations from a step S1 to a step S7 is performed as explained below.

### (Scenic Image Obtaining Process)

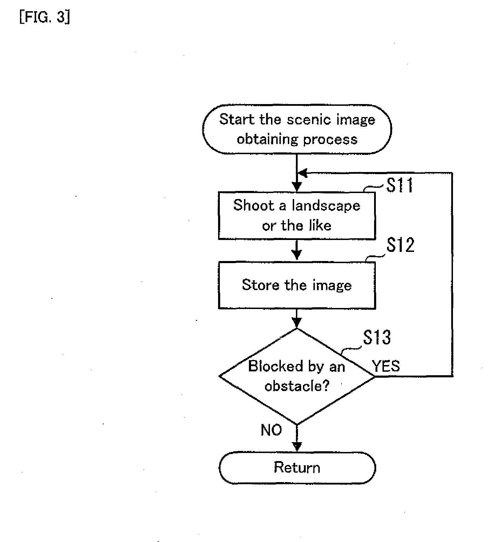

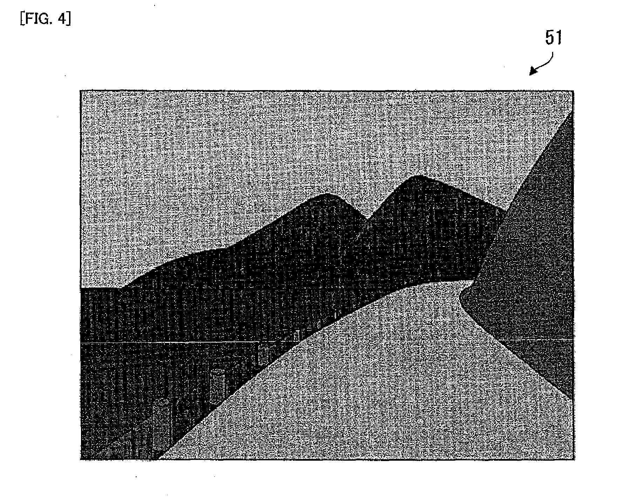

Firstly, a scenic image obtaining process will be explained with reference mainly to FIG. 3 and FIG. 4 in addition to FIG. 2. FIG. 3 is a flowchart showing the content of the scenic image obtaining process. FIG. 4 is an explanatory view showing a scenic image corresponding to scenic image data.

In FIG. 2, the scene analyzing apparatus 1 firstly performs the scenic image obtaining process (step S1). The scenic image obtaining process is mainly a process of shooting a scene (i.e. a landscape or the like) with the camera 11 and of storing scenic image data obtained by coding a scenic image including the scene which is the shooting target.

As shown in FIG. 3, on the scene analyzing apparatus 1, a series of operations from a step S11 to a step S13 is performed in the scenic image obtaining process.

The scene analyzing apparatus 1 firstly shoots a scene with the camera 11 (step S11). That is, the camera 11 shoots the scene ahead in the travel direction of the movable body, and outputs still data or motion picture data, obtained by coding the image of the scene, to the input device 12. The input device 12 obtains the still image data or motion picture data outputted from the camera 11, and generates image data on the basis of this. That is, if the data outputted from the camera 11 is the still image data, the input device 12 obtains the still image data and outputs this as the scenic image data to the work area of the memory apparatus 21. On the other hand, if the data outputted from the camera 11 is the motion picture data, the input device 12 obtains the motion picture data, extracts one frame of data from the motion picture data, and outputs this as the scenic image data to the work area of the memory apparatus 21.

Incidentally, as a general rule, the shooting of the scene with the camera 11 is performed in each predetermined travel distance (e.g. 50m) of the movable body or in each predetermined travel time (e.g. 5 seconds). For example, if the camera 11 is a camera for taking a picture, a shutter is clicked at predetermined intervals. On the other hand, if the camera 11 is a video camera, the shooting with the camera 11 is always continued during the travel of the movable body. Then, from the motion picture data obtained by this, one frame of data is extracted by the input device 12 at predetermined intervals.

An image 51 in FIG. 4 shows one example of the scenic image corresponding to the scenic image data.

In FIG. 3 again, then the scene analyzing apparatus 1 stores the scenic image data obtained by the shooting, into the work area of the memory apparatus 21 (step S12).

Then, the scene analyzing apparatus 1 judges whether or not the scene is appropriately shot with the camera 11, i.e. whether or not the image of the scene is appropriately included in the scenic image corresponding to the scenic image data. This judgment is performed by the obstacle recognition device 13. That is, the obstacle recognition device 13 recognizes whether or not an obstacle is approaching the camera 11 and the obstacle is blocking between the camera 11 and the scene (i.e. a landscape or the like) which is the shooting target (step S13). Specifically, the obstacle recognition device 13 investigates the color or the like of the scenic image corresponding to the scenic image data, specifies an object included in the scenic image, and investigates the percentage of the object in the scenic image. Then, if the percentage of the object in the scenic image is beyond a predetermined percentage, the obstacle recognition device 13 recognizes that an obstacle is approaching the camera 11 and the obstacle is blocking between the camera 11 and the scene which is the shooting target. For example, if an automobile equipped with the camera 11 runs immediately after a bus, a truck, or the like, a view ahead in the traveling direction of the automobile is blocked by the rear surface of the bus or the truck. If the shooting is performed in this circumstance, the scenic image corresponding to the scenic image data entirely shows the rear surface of the bus or the truck. In this case, the obstacle recognition device 13 recognizes that an obstacle is approaching the camera 11 and the obstacle is blocking between the camera 11 and the scene which is the shooting target.

If the obstacle is blocking between the camera 11 and the scene which is the shooting target (the step S13: YES), the scene analyzing apparatus 1 shoots the scene or the like again, and stores the scenic image data obtained by this time's shooting into the work area of the memory apparatus 21, instead of the scenic image data obtained by the previous shooting.

If the obstacle is not blocking between the camera 11 and the scene which is the shooting target and if the scene is appropriately shot with the camera 11 (the step S13: NO), the scenic image obtaining process is ended. Incidentally, position information, which indicates the shooting position of the camera 11, time information, which indicates the shooting year, month, date, and time point, and the like, may be stored in association with the scenic image data.

### (Image Division Process)

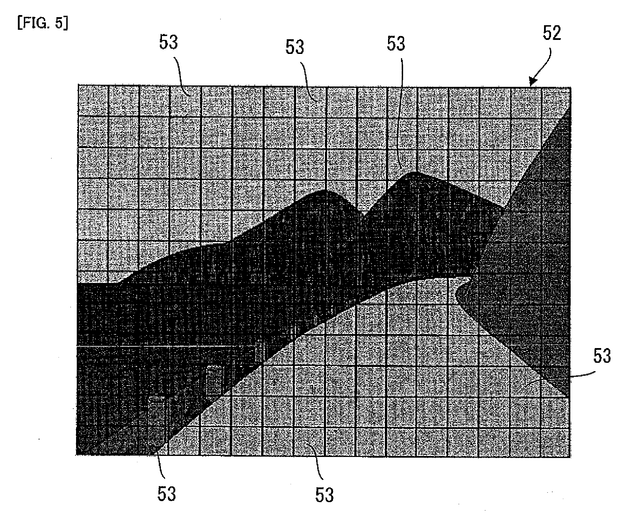

Next, the image division process will be explained with reference mainly to FIG. 5 in addition to FIG. 2. FIG. 5 is an explanatory view showing that the image in FIG. 4 is divided into image pieces.

In FIG. 2 again, the scene analyzing apparatus 1 performs the image division process, following the scenic image obtaining process (step S2). The image division process is a process of dividing the scenic image corresponding to the scenic image data obtained by the image obtaining process, into a plurality of image pieces. The image division process is performed by the image division device 14. That is, the image division device 14 divides the scenic image corresponding to the scenic image data stored in the work area of the memory apparatus 21, into a plurality of image pieces, and stores image piece data corresponding to each image piece into the work area of the memory apparatus 21. For example, if the size of the scenic image corresponding to the scenic image data is 1280×1024 pixels, the size of the image piece is desirably about 30×30 pixels. Incidentally, the size of the image piece is desirably determined in view of the accuracy and processing speed of the distance calculation process, the sky judgment process, the ocean judgment process, the mountain judgment process, the night view judgment process, or the like.

Moreover, depending on the relationship between the size of the image piece and the size of the scenic image corresponding to the scenic image data, in some cases the entire scene image cannot be divided into uniform image pieces. In this case, the edge portion of the scenic image corresponding to the scenic image data may be excluded from a target of the image division process.

An image 52 in FIG. 5 shows that the image 51 in FIG. 4 is divided into a plurality of image pieces 53 by the image division process.

### (Distance Calculation Process)

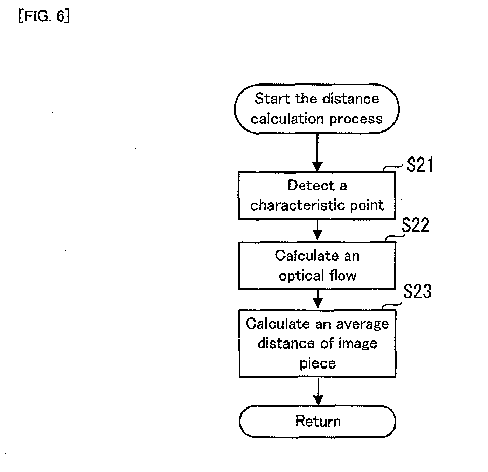

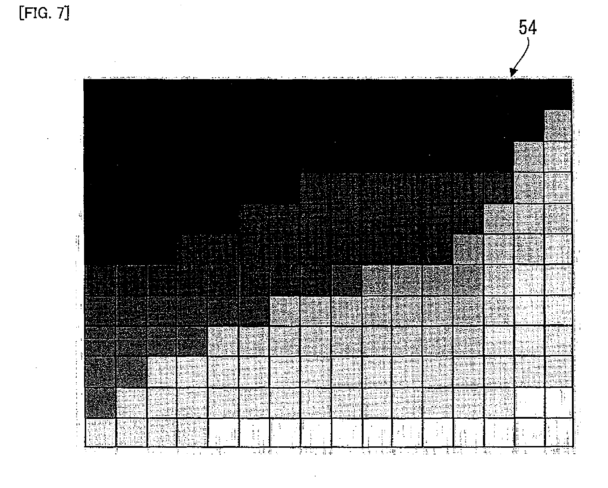

Next, the distance calculation process will be explained with reference mainly to FIG. 6 and FIG. 7 in addition to FIG. 2. FIG. 6 is a flowchart showing the content of the distance calculation process. FIG. 7 is an explanatory view showing a result of the distance calculation process performed on the image in FIG. 5.

In FIG. 2 again, the scene analyzing apparatus 1 performs the distance calculation process, following the image division process (step S3). The distance calculation process is a process of calculating a distance between the camera 11 and one portion of the scene corresponding to each side of the image obtained by the division by the image division process. The distance calculation process is performed by the distance calculation device 15.

As shown in FIG. 6, on the scene analyzing apparatus 1, a series of operations from a step S21 to a step S23 is performed in the distance calculation process.

The distance calculation device 15 firstly detects a characteristic point in each image piece, with regard to two scenic images shot in tandem (step S21). That is, with regard to the two scenic images continuous in time series, a point (in other words, pixel) suited for a predetermined condition set in advance is detected from one portion of the scene included in each image piece, as the characteristic point. Incidentally, one or a plurality of characteristic points are detected in each image piece.

Then, an optical flow is calculated from the detected characteristic points (step S22). That is, the optical flow is calculated by obtaining a change (i.e. vector) in the characteristic point detected in each image piece, with regard to the two scenic images shot in tandem.

Then, an average distance in each image piece is calculated (step S23). That is, each of the distances between the camera 11 and the plurality of characteristic points is calculated from the plurality of vectors (i.e. optical flow) corresponding to the respective plurality of characteristic points detected in each image piece. The calculated distances are averaged and calculated as the average distance in each image piece. Incidentally, with regard to the average distance in each image piece calculated in this manner, it is only necessary to recognize a relative difference between the image pieces. Thus, in the embodiment, for example, sky is treated as infinity.

In FIG. 7, the image 54 shows the result of the distance calculation process performed on the image 52 in FIG. 5. In association with the average distance in each image piece, each image piece is shown in multi stages, such as white, gray, and black. It shows that the average distance is smaller as it is brighter (i.e. closer to white) and that the average distance is larger as it is darker (i.e. closer to black).

Incidentally, if a pantoscopic camera is used as the camera 11, a parallax difference regarding the two scenic images simultaneously shot at different positions may be used to calculate the average distance in each image piece.

### (Distant View Judgment Process)

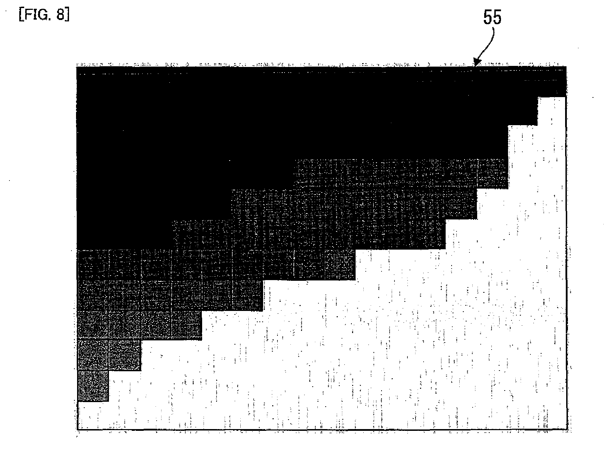

Next, the distant view judgment process will be explained with reference mainly to FIG. 8 in addition to FIG. 2. FIG. 8 is an explanatory view showing a result of the distant view judgment process performed on the image in FIG. 7.

In FIG. 2 again, the scene analyzing apparatus 1 performs the distant view judgment process, following the distance calculation process (step S4). The distant view judgment process is a process of judging whether or not one portion of the scene included in each image piece is a distant view, on the basis of the average distance in each image piece calculated by the distance calculation process. The distant view judgment process is performed by the distant view judgment device 16.

The distant view judgment device 16 judges that one portion of the scene corresponding to the image piece is a distant view (i.e. for example, a distant scene, such as the sky, an ocean, and a mountain) if the average distance in each image piece calculated by the distance calculation process is greater than a threshold value set in advance, and that one portion of the scene corresponding to the image piece is a close view (i.e. for example, a close scene, such as a road in drive and a vehicle ahead) if the average distance in each image piece calculated by the distance calculation process is less than the threshold value set in advance. Then, of the plurality of image pieces in the scenic image, the number of image pieces judged to be the distant view is counted.

If the number of image pieces judged to be the distant view is less than a certain number (e.g. a half of the number of all image pieces) set in advance (the step S4: NO), the operations from the step S1 are performed again.

In FIG. 8, the image 55 shows the result of the distant view judgment process performed on the image 54 in FIG. 7. FIG. 8 shows only the image pieces judged to be the distant view, in color of gray, black, or the like. The image pieces judged to be the close view correspond to a not-displayed portion (i.e. white portion). As described above, the distant view judgment process allows the judgment of which portion of the scene corresponding to the scenic image is the distant view and which portion is the close view.

### (Characteristic Judgment Process)

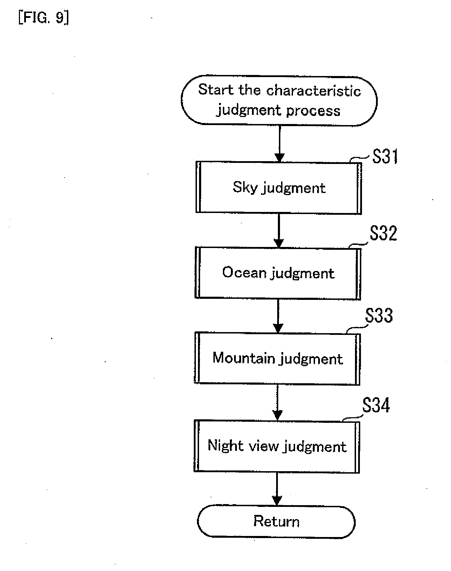

Next, the characteristic judgment process will be explained with reference mainly to FIG. 9 to FIG. 13 in addition to FIG. 2. FIG. 9 is a flowchart showing the content of the characteristic judgment process.

In FIG. 2 again, if the number of image pieces judged to be the distant view is greater than or equal to the certain number set in advance (the step S4: YES), the scene analyzing apparatus 1 then performs the characteristic judgment process (step S5). Incidentally, only the image pieces judged to be the distant view are the targets of the characteristic judgment process.

As shown in FIG. 9, on the scene analyzing apparatus 1, a series of operations from a step S31 to a step S34 is performed, as explained below, in the characteristic judgment process. Incidentally, the processes from the step S32 to the step S34 may be performed in any order, not limited to the order shown in FIG. 9.

### (Sky Judgment Process)

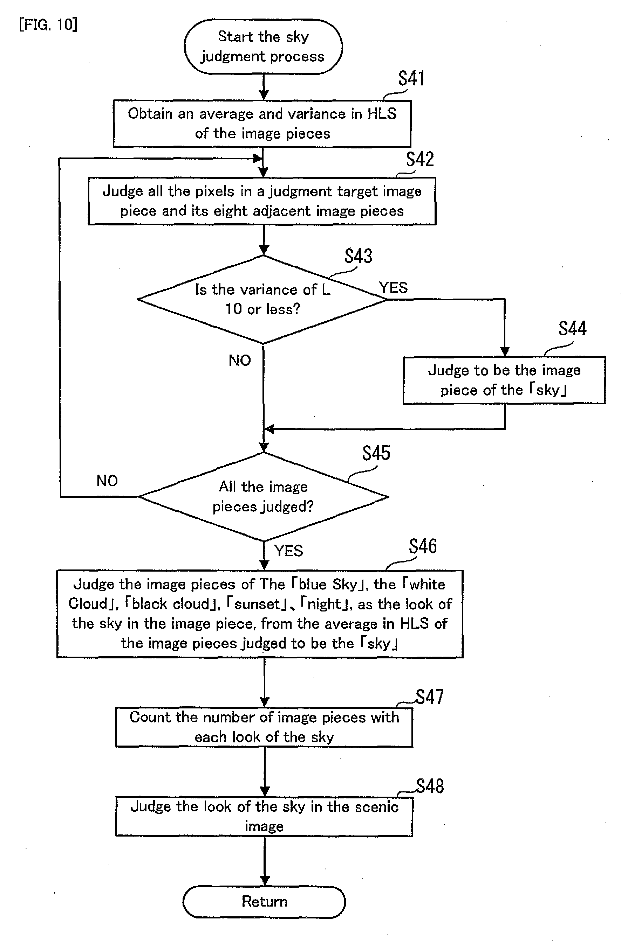

Firstly, the sky judgment process will be explained with reference mainly to FIG. 10 in addition to FIG. 9. FIG. 10 is a flowchart showing the content of the sky judgment process.

In FIG. 9, the scene analyzing apparatus 1 firstly performs the sky judgment process (step S31). The sky judgment process is a process of judging whether or not one portion of the scene corresponding to each image piece is the sky. The sky judgment process is performed by the sky judgment device 17.

As shown in FIG. 10, on the scene analyzing apparatus 1, a series of operations from a step S41 to a step S48 is performed in the characteristic judgment process.

The sky judgment device 17 firstly calculates an average value and a variance value in hue H, lightness L, and saturation S of the plurality of pixels included in each image piece (step S41). The calculated average value and variance value are stored into the work area of the memory apparatus 21. Then, the average value and the variance value of all the pixels in each of one image piece which is a judgment target and its eight adjacent image pieces (i.e. eight image pieces located around the one image piece which is the judgment target) are read from the work area of the memory apparatus 21 (step S42). The image piece which is the judgment target is the image piece located in the upper part, typically in the upper half of the scenic image. The series of operations from the step S42 to the step S45 is repeated in each image piece which is the judgment target.

Incidentally, if the color information about the image piece data corresponding to the image piece is RGB-system color information, this color information is converted to color-system color information using hue, saturation, and lightness (i.e. brightness) as parameters, e.g. HLS-system color information.

Then, the sky judgment device 17 judges whether or not the variance value in the lightness L of all of the one image piece which is the judgment target and the eight adjacent image pieces is less than or equal to 10 (step S43). If the variance value in the lightness L of all of the one image piece which is the judgment target and the eight adjacent image pieces is less than or equal to 10 (the step S43: YES), one portion of the scene included in one image piece which is the judgment target is judged to be the "sky" (step S44). That is, the image piece which is the judgment target is judged to be the image piece of the "sky". The result judged to be the "sky" is stored into the work area of the memory apparatus 21. Then, the sky judgment device 17 judges whether or not the series of operations from the step S42 to the step S44 is performed on all the image pieces that are to be the judgment targets (step S45). If the judgment is not performed on all the image pieces that are to be the judgment targets (the step S45: NO), the operations from the step S42 are performed again on the next image piece.

On the other hand, if the variance value in the lightness L of all of the one image piece which is the judgment target and the eight adjacent image pieces is greater than 10 (the step S43: NO), the sky judgment device 17 judges whether or not the series of operations from the step S42 to the step S44 is performed on all the image pieces that are to be the judgment targets (the step S45). If the judgment is not performed on all the image pieces that are to be the judgment targets (the step S45: NO), the operations from the step S42 are performed again on the next image piece.

As described above, with regard to the image pieces judged to be the distant view by the distant view judgment process, of the image pieces included in the scenic image, it is judged whether or not they are the image pieces of the "sky" by the series of operations from the step S41 to the step S44. In the embodiment, moreover, the sky judgment device 17 performs a look-of-the-sky judgment process explained below, on the basis of the image pieces judged to be the image pieces of the "sky", as one portion of the sky judgment process.

### (Look-of-the-sky Judgment Process)

In FIG. 10, if the judgment is performed on all the image pieces that are to be the judgment targets (the step S45: YES), then the sky judgment device 17 performs the look-of-the-sky judgment process (step S46 to step S48). The look-of-the-sky judgment process is a process of judging the look of the sky in the scenic image.

The sky judgment device 17 firstly judges the look of the sky in each image piece, on the basis of the average value in the hue H, the lightness L, and the saturation S of the image pieces judged to be the image pieces of the "sky" (step S46). That is, the sky judgment device 17 reads the average value in the hue H, the lightness L, and the saturation S of the image pieces judged to be the image pieces of the "sky", from the work area of the memory apparatus 21. Then, the look of the sky is judged in accordance with whether or not the average value in the hue H, the lightness L, and the saturation S of the image pieces judged to be the image pieces of the "sky" satisfies judgment conditions set in advance. As the look of the sky in the image piece, for example, a "blue-sky", a "white cloud", a "black cloud", "sunset", "night", and the like are set. The judgment conditions can be set as follows, for example. Incidentally, the hue H, the lightness L, and the saturation S are expressed in a range of 0 to 255.

With regard to the judgment condition to judge that the image piece is the "blue-sky", the average value in the hue H is greater than or equal to 100 and less than 160, the average value of the lightness L is greater than or equal to 100 and less than 180, and the average value of the saturation S is greater than or equal to 60.

With regard to the judgment condition to judge that the image piece is the "white cloud", the average value of the lightness L is greater than or equal to 180.

With regard to the judgment condition to judge that the image piece is the "black cloud", the average value of the lightness L is less than 180, and the average value of the saturation S is less than 60.

With regard to the judgment condition to judge that the image piece is the "sunset", the average value in the hue H is greater than or equal to 0 and less than 50, or it is greater than or equal to 220 and less than or equal to 250, the average value of the lightness L is less than 180, and the average value of the saturation S is greater than or equal to 60.

With regard to the judgment condition to judge that the image piece is the "night", the average value of the lightness L is less than 100.

After judging the look of the sky in each image piece on the basis of the judgment conditions, the sky judgment device 17 counts the number of image pieces with each look of the sky (step S47). That is, the counting is performed on each of the number of image pieces judged to be the "blue-sky", the number of image pieces judged to be the "white cloud", the number of image pieces judged to be the "black cloud", the number of image pieces judged to be the "sunset", and the number of image pieces judged to be the "night". The number of image pieces with each look of the sky is stored into the work area of the memory apparatus 21. Then, the sky judgment device 17 judges the look of the sky in the scenic image (step S48). That is, of the image pieces in the look of the sky, the look of the sky with the largest number is judged to be the look of the sky in the scenic image. For example, if the number of image pieces judged to be the "blue-sky" is greater than the any other numbers of image pieces judged to be the other looks of the sky, such as the "white cloud", the "black cloud", the "sunset", and the "night", the look of the sky in the scenic image is judged to be the "bluc-sky".

### (First Modified Example of Sky Judgment Process)

In the aforementioned sky judgment device 17, the image pieces which are the judgment targets are fixed to be in the upper part (typically, the upper half) of the scenic image; however, an area of the image pieces which are the judgment targets may be variable.

For example, the image pieces which belong to the upper side of a horizon (or skyline) shown in the scenic image may be the judgment targets of the sky judgment process. In this case, for example, a road disappearing point in the scenic image is detected, and the position of the horizon is specified on the basis of the disappearing point. In this case, an intersection of the extended lines of lines (e.g. white lines) extending along the both edges of the road may be detected and used as the disappearing point.

By determining the area of the image pieces which are the judgment targets in this manner, for example, even if the position of the horizon in the shot scenic image is displaced vertically because of the vertical motion of the movable body or the motion in the mounting direction of the camera, the sky judgment process can be performed, more highly accurately.

Alternatively, the horizon in the scenic image may be detected by using a G sensor (or accelerator sensor) for detecting the tilt of the camera, and the image pieces which belong to the upper side of the horizon may be set as the judgment targets of the sky judgment process. Even in this case, the sky judgment process can be performed, more highly accurately.

### (Second Modified Example of Sky Judgment Process)

On the basis of the judgment result of the look of the sky in each image piece by the aforementioned sky judgment process, a cloud shape may be judged. That is, a boundary in which the image pieces judged to be the "blue-sky" or the "sunset" and the image pieces judged to be the "white cloud" or the "black cloud" are adjacent each other is detected to thereby judge the cloud shape. For example, if the boundary that a group of the image pieces of the "white cloud" and a group of the image pieces of the "blue-sky" are adjacent to each other extends vertically in the scenic image, it can be judged to be a thunderhead (or long cloud). Alternatively, if the boundary that a group of the image pieces of the "white cloud" and a group of the image pieces of the "blue-sky" are adjacent to each other is patchy or wavy in the scenic image, it can be judged to be a cirrocumulus (or altocumulus).

### (Third Modified Example of Sky Judgment Process)

In the aforementioned look-of-the-sky judgment process, with regard to the judgment condition to judge that the image piece is the "white cloud", the average value in the lightness L may be greater than or equal to 180 and less than 240. With regard to the judgment condition to judge that the image piece is "overexposed or blown out", the average value of the lightness L may be greater than or equal to 240. In this case, it can be judged that the image of the sky is overexposed or blown out because of backlight, and it is possible to increase the accuracy of the look-of-the -sky judgment process.

### (Ocean Judgment Process)

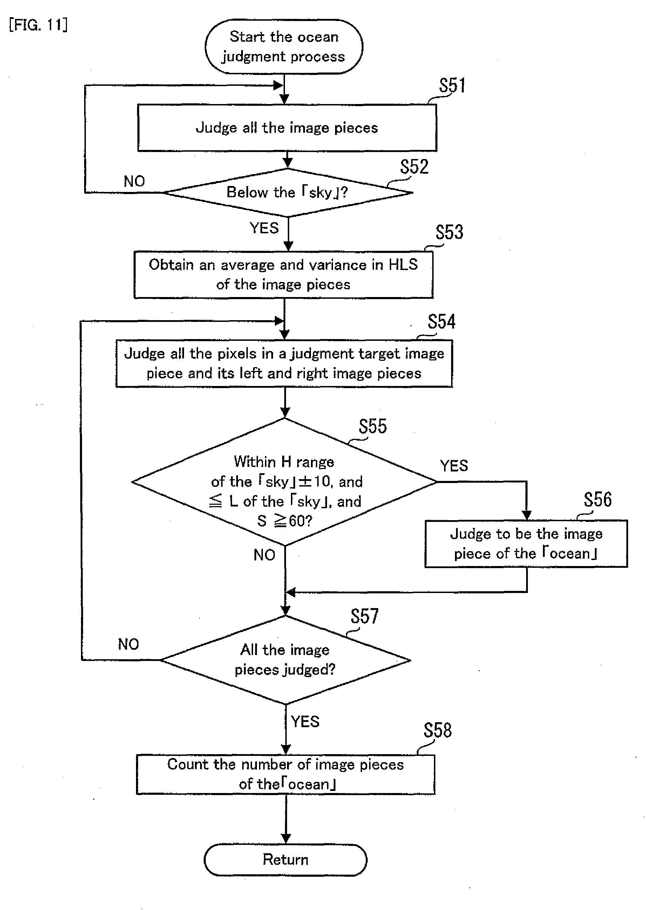

Next, the ocean judgment process will be explained with reference mainly to FIG. 11 in addition to FIG. 9. FIG. 11 is a flowchart showing the content of the ocean judgment process.

In FIG. 9, the scene analyzing apparatus 1 performs the ocean judgment process following the sky judgment process (step S32). The ocean judgment process is a process of judging whether or not one portion of the scene corresponding to each image piece is the ocean. The ocean judgment process is performed by the ocean judgment device 18. The ocean judgment device 18 judges whether or not the image pieces located on the lower side of the image pieces of the "sky" are the "ocean".

As shown in FIG. 11, on the scene analyzing apparatus 1, a series of operations from a step S51 to a step S58 is performed in the ocean judgment process.

The ocean judgment device 18 firstly reads the sky judgment result by the sky judgment process, from the work area of the memory apparatus 21 (step S51). At this time, one image piece is selected as the image piece which is the target of the process by the subsequent step S52. Then, it is judged whether or not the target image piece is located on the lower side of the image pieces of the "sky" (step S52). If the target image piece is not located on the lower side of the image pieces of the "sky" (the step S52: NO), then the operational flow returns to the step S51 again, and the next image piece is selected. If the target image piece is located on the lower side of the image pieces of the "sky" (the step S52. YES), then the ocean judgment device 18 calculates the average value and the variance value in the hue H, the lightness L, and the saturation S of the plurality of pixels included in each image piece (step S53). The calculated average value and variance value are stored into the work area of the memory apparatus 21. Then, the average value and the variance value of all the pixels in each of one image piece which is the judgment target and its two right and left image pieces are read from the work area of the memory apparatus 21 (step S54). Then the series of the step S54 to the step S57 is repeated in each image piece which is the judgment target.

The ocean judgment device 18 judges whether or not the average value in the hue H, the lightness L, and the saturation S of all of the one image piece which is the judgment target and the two right and left image pieces satisfies a judgment condition (referred to an "ocean judgment condition'') (step S55). The ocean judgment condition can be set as follows, for example. Incidentally, the hue H, the lightness L, and the saturation S are expressed in a range of 0 to 255.

In the ocean judgment condition, the average value in the hue H is within ±10 of the range of the average value in the hue H of the image pieces of the "sky", the average value of the lightness L is less than or equal to the minimum value of the average value in the lightness L of the image pieces of the "sky", and the average value of the saturation S is greater than or equal to 60.

If the aforementioned ocean judgment condition is satisfied (the step S55: YES), the image piece which is the judgment target is judged to be the image piece of the "ocean" (step S56). In particular, the ocean judgment condition is set on the basis of the average value in the hue H and the lightness L of the image pieces of the "sky", so that it is possible to judge that that one portion of the scene included in the image piece is the "ocean" highly accurately by the ocean judgment process, by reflecting such a characteristic that the ocean has a deeper color than the color of the sky because the ocean reflects the color of the sky. Moreover, whether or not to satisfy the ocean judgment condition is judged not only for the image piece which is the judgment target but also for the right and left image pieces adjacent to the target image piece. Thus, it is possible to judge that that one portion of the scene included in the image piece is the "ocean" highly accurately by the ocean judgment process, by reflecting such a characteristic that the ocean spreads horizontally.

The result judged to be the "ocean" is stored into the work area of the memory apparatus 21. Then, the ocean judgment device 18 judges whether or not the series of operations from the step S54 to the step S56 is performed on all the image pieces to be the judgment targets (step S57). If the judgment is not performed on all the image pieces to be the judgment targets (the step S57: NO), the operations from the step S52 are performed again on the next image piece.

On the other hand, if the average value in the hue H, the lightness L, and the saturation S of any of the one image piece which is the judgment target and the right and left image pieces does not satisfy the ocean judgment condition (the step S55: NO), the ocean judgment device 18 judges whether or not the series of operations from the step S54 to the step S56 is performed on all the image pieces to be the judgment targets (the step S57). If the judgment is not performed on all the image pieces to be the judgment targets (the step S57: NO), the operations from the step S52 are performed again on the next image piece.

If the judgment is performed on all the image pieces to be the judgment targets (the step S57: YES), then the ocean judgment device 18 counts the number of image pieces of the "ocean" (step S58). At this time, if the number of image pieces of the "ocean" is greater than or equal to a threshold value set in advance (e.g. 1/5 of the number of all the image pieces), it is judged that the scenic image includes the scene with an ocean view.

### (Mountain Judgment Process)

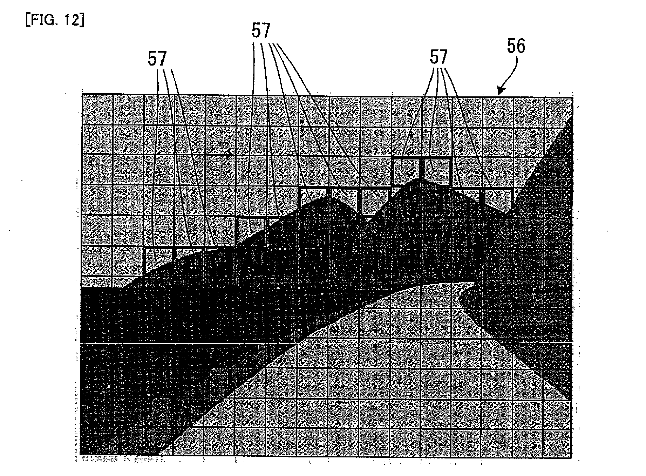

Next, the mountain judgment process will be explained with reference mainly to FIG. 12 in addition to FIG. 9. FIG. 12 is an explanatory view explaining a result of the mountain judgment process performed on the image in FIG. 5.

In FIG. 9 again, the scene analyzing apparatus 1 performs the mountain judgment process following the ocean judgment process (step S33). The mountain judgment process is a process of judging whether or not the scene corresponding to the scenic image includes a mountain. The mountain judgment process is performed by the mountain judgment device 19.

The mountain judgment device 19 firstly judges whether or not one portion of the scene included in the image piece is a "ridgeline". For example, with regard to the image piece located in the upper part of the scenic image, if 70% or more of the pixels can be judged to have a sky color, the image pieces are judged to be the "sky", and if less than 30% of the pixels can be judged to have a sky color, the image piece is judged to be "except the sky". Moreover, if 30% or more and less than 70% of the pixels can be judged to have the sky color and if its upper image piece is the image piece of the "sky" and its lower image piece is the image piece except the "sky", one portion of the scene included in the image piece is judged to be the "ridgeline". That is, the relevant image piece is judged to be the image piece of the "ridgeline". Here, the judgment of whether or not to be the sky color maybe performed by judging whether or not the hue H, the lightness L, and the saturation S of the pixel is included in the range of the hue H, the lightness L, and the saturation S in the aforementioned sky judgment device.

Then, the mountain judgment device 19 counts the number of image pieces of the "ridgeline". Then, if the number of image pieces of the "ridgeline" is greater than or equal to a threshold value set in advance (e.g. 10), it is judged that the scenic image includes the scene with a mountain or mountain range view.

In FIG. 12, an image 56 shows the result of the mountain judgment process performed on the image 52 in FIG. 5. The image 56 includes twelve image pieces 57 of the "ridgeline".. Thus, the image 56 is judged to be the scene with the mountain or mountain range view.

Then, the mountain judgment result by the mountain judgment process is stored into the work area of the memory apparatus 21.

In the aforementioned mountain judgment process, a mountain name may be judged on the basis of the position of the mountain range in the mountain range and the shape of the ridgeline in the scenic image. Alternatively, an undulating ridgeline, a distance of the mountain range, and season information, such as a snowcapped mountain and fall foliage, or the like may be detected.

For example, the position of the mountain range in the scenic image may be judged to be the position of the image piece located on the uppermost side in the scenic image, of the image pieces of the "ridgeline". Moreover, a plurality of image pieces of the "ridgeline" located on the upper side of the horizontal image pieces of the "ridgeline" may be judged to be the top of the mountain range.

For example, the shape of the ridgeline may be detected as a characteristic amount by following the image pieces of the "ridgeline" horizontally, to thereby judge the mountain name. For example, if such a shape that it is flat near the summit and the ridgeline is gradually declining on the right and left is detected, the mountain corresponding to the scenic image can be judged to be "Mt. Fuji". Similarly, the mountain name can be judged by preparing in advance the mountain ranges which are characterized in terms of the shape of the ridgeline.

For example, the undulating ridgeline may be detected by following the image pieces of the "ridgeline" horizontally and characterizing the vertical motion or undulation at that time. Moreover, a sharp mountain range or a gentle mountain range may be judged.

For example, with regard to the distance of the mountain range, the top of the ridgeline may be judged by the method for the position of the mountain range in the scenic image described above, and the distance of the image piece(s) under the top may be judged to be the distance of the mountain range.

For example, with regard to the season information, such as a snowcapped mountain and fall foliage, the top of the mountain range is judged by the judgment of the position of the mountain range in the scenic image described above, and the color information about the image piece(s) under the top is detected. If it is white, it may be judged to be the snowcapped mountain, and if it is red or orange, it may be judged to be the fall foliage.

### (Night View Judgment Process)

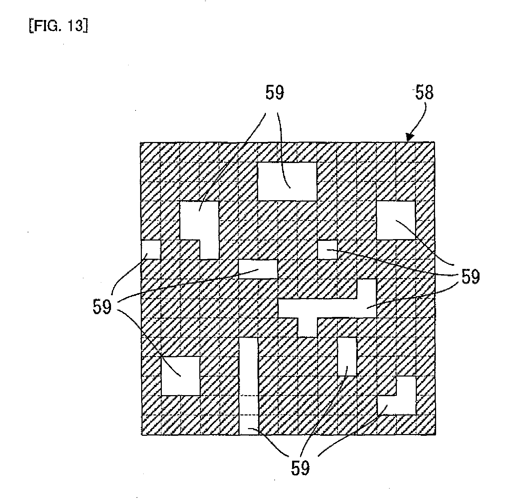

Next the night view judgment process will be explained with reference mainly to FIG. 13 in addition to FIG. 9. FIG. 13 is an explanatory view explaining a result of the night view judgment process performed on image pieces.

In FIG. 9 again, the scene analyzing apparatus 1 performs the night view judgment process following the mountain judgment process (step S34). The night view judgment process is a process of judging whether or not the scene corresponding to the scenic image includes a night view. The night view judgment process is performed by the night view judgment device 20.

The night view judgment device 20 judges whether or not the scene included in the scenic image is the "night view". At this time, if there are a certain number (e.g. 10) or more of the image pieces judged to be the "night" by the look-of-the-sky judgment process in the sky judgment process, the image piece except the image pieces judged to be the "sky" is the image piece which is the judgment target. The night view judgment device 20 binarizes the image piece which is the judgment target with regard to the lightness L. That is, a threshold value L0 of the lightness L is set in advance, and it is judged whether or not the lightness of each pixel which belongs to the image piece is greater than or equal to the threshold value L0.

In FIG. 13, the image piece 58 is binarized by the threshold value L0 with regard to the lightness L. The pixel with the lightness greater than or equal to the threshold value L0 is shown in white, and the pixel with the lightness less than the threshold value L0 is shown by diagonally right up lines.

Then, the night view judgment device 20 counts the number of groups composed of the adjacent pixels with the lightness greater than or equal to the threshold value L0, as the number of light particles. Incidentally, one pixel with the lightness greater than or equal to the threshold value L0, surrounded by the pixels with the lightness less than the threshold value L0, may be counted in as the number of light particles.

In FIG. 13, the image piece 58 includes eleven groups composed of the pixels with the lightness greater than or equal to the threshold value L0, i.e. eleven light particles 59.

Then, the night view judgment device 20 judges whether or not the number of light particles included in the image piece is greater than or equal to the number set in advance (e.g. 10), to thereby judge whether or not one portion of the scene included in the scenic image is the "night view". That is, the image piece including the preset number (e.g. 10) or more of light particles is judged to be the image piece of the "night view".

In FIG. 13, since the image piece 58 includes eleven light particles 59, the image piece 58 is judged to be the image piece of the "night view".

The night view judgment device 20 sequentially performs the aforementioned judgment of whether or not to be the image piece of the "night view", on all the image pieces which are the judgment targets included in the scenic image.

Then, the night view judgment device 20 counts the number of image pieces of the "night view" and judges whether or not the number of image pieces of the "night view" is greater than or equal to the number set in advance (e.g. 10), to thereby judge whether or not the scenic image is the "night view". That is, the scenic image including the preset number (e.g. 10) or more of image pieces of the "night view" is judged to be the scenic image of the "night view". Incidentally, the level of the night view may be judged in accordance with the number of image pieces of the "night view" included in the scenic image.

Then, the night view judgment result by the night view judgment process is stored into the work area of the memory apparatus 21.

### (Modified Example of Night View Judgment Process)

In the aforementioned night view judgment process, the characteristic of the night view may be judged on the basis of the position of the image piece of the "night view" in the scenic image.

For example, if there are many image pieces of the "night view" located in the lower half of the scenic image, the night view in the scenic image is judged to be a "night view below one's eyes". If there are many image pieces of the "night view" located in the upper half of the scenic image, the night view in the scenic image is judged to be a "distant night view of a street".

### (Action Process)

In FIG. 2 again, the scene analyzing apparatus 1 performs an action process following the characteristic judgment process (step S6). The action process is a process of storing the scenic image into the storage area of the memory apparatus, on the basis of the processing result of the characteristic judgment process (i.e. the sky judgment process, the ocean judgment process, the mountain judgment process, and the night view judgment process). Alternatively, the action process may be a process of performing a predetermined types of actions (refer to various modified examples described later) on the basis of the result of the characteristic judgment process, in addition to or instead of the storage of the scenic image based on the result of the characteristic judgment process.

In FIG. 2, after the characteristic judgment process, the scene analyzing apparatus 1 judges whether or not the scenic image satisfies an action condition set in advance, on the basis of the sky judgment process result, the ocean judgment process result, the mountain judgment process result, and the night view judgment process result. The action condition is the characteristic of the scene included in the scenic image. If the scenic image satisfies the action condition set in advance, the scenic image is stored into the storage area of the memory apparatus 21, as the action. For example, if the scene included in the scenic image satisfies that "the ocean can be seen, a mountain range is far away, and the look of the sky is bright and clear" as the action condition, the scenic image is stored into the storage area of the memory apparatus 21. Incidentally, if the action condition is satisfied, the camera 11 may be used as a digital camera to automatically take a picture, and the scenic image may be stored into the storage area of the memory apparatus 21. Thus, by setting, as the action condition, what kind of scenic image is desirably shot or stored, it is possible to automatically store the scenic image which satisfies the action condition while driving. Moreover, it is unnecessary to register in advance the positions of places with scenes suitable for the shooting. Moreover, it is possible to store the scenic image that a user desires, in accordance with a change in the scene, such as the look of the sky.

### (First Modified Example of Action Process)

In the aforementioned action process, the following process may be performed as the action to the sky judgment result (or the look-of-the-sky judgment result) by the sky judgment process (or the look-of-the-sky judgment process).

For example, the look of the sky may be transmitted to a server by a communication device or a mobile phone to share the look of the sky in real time on the server and distribute it to a plurality of receiving apparatuses. Moreover, the image of the look of the sky may be also transmitted simultaneously.

For example, a camera mode may be changed in accordance with the look of the sky. For example, the camera mode may be changed to a shooting mode in the case of a clear sky, and to a non-shooting mode in the case of a cloudy sky. Alternatively, it may be changed to a non-shooting mode in backlight or the like.

For example, if the "black cloud" suddenly increases, a user may be alerted because there is a more chance of heavy rain, rain, and hail. Moreover, it may be stored as video because it is possibly an impressive scene. Alternatively, if it is judged from the look of the sky that it looks like rain, a user may be guided to an enjoyable indoor place, such as an aquarium and a museum, as the destination of the drive. Alternatively, the look of the sky is judged in getting out, and if it is judged that it looks like rain, a user may be directed to take an umbrella.

For example, if it is judged to be the "black cloud", a sudden change in the amount of light may be used to judge thunder, and the moment of the thunder may be shot.

For example, if the image pieces of the "sky" are lacked in an arc shape, it may be judged to be a rainbow and be shot.

For example, if the "sunset" and "overexposure" by the backlight are judged, it may be judged to be a "scene with the sun setting" and be shot.

For example, the music may be changed on the basis of the look-of-the-sky judgment result. For example, the music may be changed to a rhythmic song in the case of the "blue-sky" and to a quiet song in the case of the "black cloud".

For example, if the cloud shape is judged and if it is rare, the scene may be shot.

For example, if it is judged to be a nice day from the look-of-the-sky judgment, it may be instructed to direct the camera upward. Alternatively, a movable camera may be used to automatically direct upward to increase the area of the "sky" in the scenic image and shoot it.

For example; if it is judged to be "overexposed or blown out" by the backlight, the movable camera may be displaced to avoid the image pieces of the "overexposure" by the backlight.

For example, if it is judged that the "black cloud" is approaching from front, a user may be guided to a destination so as to escape from the approaching direction.

### (Second Modified Example of Action Process)

In the aforementioned action process, the following process may be performed as the action to the ocean judgment result by the ocean judgment process.

For example, a coastal road with an ocean view may be reflected in map information.

For example, on the basis of the positions of the image pieces of the "ocean" in the scenic image, a direction that the ocean can be seen (e.g. the left side, the right side, both the right side and the left side, front, and the like, viewed from a driver) may be reflected in the map information. Using the map information allows the selection of a road with an ocean view on the left side (or right side) of a vehicle, which enables a driver to drive while looking at the ocean without being hindered by oncoming vehicles. Alternatively, for example, as a road with a fine view for a front-seat passenger, a user may be guided to a road with an ocean view on the left side (or right side).

For example, if it is judged to be the scene including the ocean over a long time period or long distance, it may be shot as video.

For example, if it is judged to be the "ocean", a movable camera may be rotated to the ocean.

For example, if it is judged to be the "ocean", the music may be changed to a song that matches the ocean (e.g. Southern All Starts or a Japanese band group, and the like)

### (Third Modified Example of Action Process)

In the aforementioned action process, the following process may be performed as the action to the mountain judgment result by the mountain judgment process.

For example, a user may be guided to a road with a view ofMt. Fuji or a popular mountain. Alternatively, a road with a mountain view at the front may be prioritized for the guidance.

For example, the names of the mountains judged may be read out for sightseeing.

For example, the images of a distant mountain range in seasons may be collected. For example, the images of fresh green, fall foliage, a snowcapped mountain, or the like may be shot, and the images shot at the same point may be arranged and displayed on a monitor. The images may be transmitted to a server with information about time points and places, to thereby collect the images. That is, the images shot by another person may be used.

### (Fourth Modified Example of Action Process)

In the aforementioned action process, the following process may be performed as the action to the night view judgment result by the night view judgment process.

For example, in driving on a countryside road, the moment that the night view suddenly spreads may be shot.

For example, a road with a beautiful night view may be judged and reflected in the map information.

For example, fireworks may be judged and shot in the same judgment method as that for the night view.

For example, the images at points with a beautiful night view may be collected in a server, and the night view image may be obtained from the server and displayed in passing through the point in daytime.

### (Fifth Modified Example of Action Process)

In the aforementioned action process, the following process may be performed as the action to the result obtained by combining at least two of the sky judgment result (or the look-of-the-sky judgment result), the ocean judgment result, the mountain judgment result, and the night view judgment result.

For example, on the basis of the look-of-the-sky judgment result and the mountain judgment result, the weather may be predicted from the shapes of clouds above a mountain. For example, the shapes of clouds above Mt. Fuji may be judged from the look-of-the-sky judgment result and the mountain judgment result, to thereby predict the weather.

For example, if the ocean is seen, a mountain range is far, and the look of the sky is clear and sunny, the mode may be changed to a high-resolution mode to thereby store high-quality images. Alternatively, for example, a place to temporarily stop a vehicle, such as an observatory, may be searched for and a user may be guided thereto, or the music may be changed to the user's favorite song.

For example, if the look of the sky is bad on a road with a fine view of the ocean and a mountain range, the image when the look of the sky is good may be obtained from a server and displayed on a monitor. By virtue of this, even if visibility is poor and a user cannot have a fine view because of the bad look of the sky, such as a fog, the user can image the scene when the look of the sky is good by looking at the image on the monitor.

In FIG. 2 again, the scene analyzing apparatus 1 judges whether or not it continues the operations after the action process. If it continues the operations (step S7: YES), the scene analyzing apparatus 1 performs the operations from the step S1. If it does not continue the operations (the step S7: NO), the scene analyzing apparatus 1 ends the operations.

As explained above, according to the scene analyzing apparatus in the embodiment, it can analyze the image, which is shot with an on-vehicle camera, and judge the characteristic of the scene included in the image. Moreover, by setting the condition, such as what type of scenic image is desirably shot or stored, it is possible to automatically shoot or store the scenic image which satisfies the condition while driving. Moreover, it is unnecessary to register in advance the positions of places with scenes suitable for the shooting. Moreover, it is possible to store the scenic image that a user desires, in accordance with a change in the scene, such as the look of the sky.

The present invention is not limited to the aforementioned embodiment, and various changes may be made without departing from the essence or spirit of the invention which can be read from the claims and the entire specification. A scene analyzing apparatus and method and a computer program which realizes these functions, all of which involve such changes, are also intended to be within the technical scope of the present invention.

### Industrial Applicability

The scene analyzing apparatus and method according to the present invention can be applied to a scene analyzing apparatus or the like, which judge the characteristic of a scene included in an image by analyzing the image, which is shot with a camera or the like provided for an automobile. Moreover, they can be applied to a scene analyzing apparatus or the like, which is mounted on or can be connected to various computer equipment for consumer use or business use, for example.

## Claims

1. A scene analyzing apparatus comprising:
a scenic image obtaining device for obtaining a plurality of scenic images;
an image dividing device for dividing each of the plurality of scenic images into a plurality of image pieces; and
a distant view judging device for judging whether or not one portion of a scene, which corresponds to each of the plurality of image pieces, of the scene corresponding to the scenic image is a distant view.

2. The scene analyzing apparatus according to claim 1, further comprising: a distance calculating device for calculating a distance to the one portion of the scene corresponding to each of the plurality of image pieces,
said distant view judging device judging whether or not the one portion of the scene is the distant view on the basis of the calculated distance.

3. The scene analyzing apparatus according to claim 1 or 2, further comprising a characteristic judging device for judging whether or not the one portion of the scene corresponds to at least one of a sky, an ocean, a mountain, and a night view, with regard to the image piece corresponding to the one portion of the scene judged to be the distant view.

4. The scene analyzing apparatus according to claim 3, wherein said characteristic judging device includes a sky judging device for judging whether or not the one portion of the scene is the sky, from a variance value in lightness of a plurality of pixels included in the image piece located in an upper part of the scenic image, with regard to the image piece located in the upper part of the plurality of image pieces.

5. The scene analyzing apparatus according to claim 4, wherein said characteristic judging device includes an ocean judging device for judging whether or not the one portion of the scene is the ocean, on the basis of average hue and average saturation of the plurality of pixels included in the image piece judged to be the sky, with regard to the image piece that is not judged to be the sky.

6. The scene analyzing apparatus according to claim 4, wherein said characteristic judging device includes a mountain judging device for detecting a boundary between the sky and the scene except the sky by analyzing a color property in each of the image pieces adjacent to the image piece judged to be the sky, of the image pieces that are not judged to be the sky, to thereby judge whether or not the scene includes the mountain.

7. The scene analyzing apparatus according to claim 3, wherein said characteristic judging device includes a night view judging device for judging whether or not the one portion of the scene is the night view, on the basis of the number of pixel groups classified in a higher part than a reference, of a plurality of pixel groups classified by binarizing the pixels with a predetermined value of lightness as the reference, with regard to each of the plurality of image pieces.

8. The scene analyzing apparatus according to claim 3, further comprising a scenic image storing device for storing the scenic images in accordance with a characteristic judgment result by said characteristic judging device.

9. The scene analyzing apparatus according to claim 4, wherein the sky judging device judges a look of the sky in the one portion of the scene judged to be the sky.

10. A scene analyzing method comprising:
a scenic image obtaining process of obtaining a plurality of scenic images;
an image dividing process of dividing each of the plurality of scenic images into a plurality of image pieces; and
a distant view judging process of judging whether or not one portion of a scene, which corresponds to each of the plurality of image pieces, of the scene corresponding to the scenic image is a distant view.

11. A computer program making a computer function as the scene analyzing apparatus according to claim 1.
